# EUROPEAN PATENT SPECIFICATION

(11) **EP 2 563 589 B1**
(45) Date of publication and mention of the grant of the patent: **28.06.2017**
(21) Application number: 11775339.2
(22) Date of filing: 18.04.2011
(51) Int. Cl.: B32B 5/28, B32B 5/00, B32B 5/24, E21D 11/38, B32B 3/28, B32B 5/26, B32B 27/12, B32B 5/02, B32B 5/06, B32B 5/08, B32B 5/12, B32B 7/14, B32B 3/14

(54) **LAMINATED FIRE-PROOF MEMBRANE AND METHOD FOR FABRICATING SAME**
LAMINIERTE FEUERFESTE MEMBRAN UND HERSTELLUNGSVERFAHREN DAFÜR
MEMBRANE IGNIFUGE STRATIFIÉE ET PROCÉDÉ POUR SA FABRICATION

(30) Priority: 27.04.2010 NO 20100605
(43) Date of publication of application: 06.03.2013
(73) Proprietor: Cheetham, John Oldroyd, 3924 Porsgrunn (NO)
(72) Inventor: Cheetham, John Oldroyd, 3924 Porsgrunn (NO)
(74) Representative: Acapo AS
(86) International application number: PCT/NO2011/000131
(87) International publication number: WO 2011/136656

(56) References cited:
- WO-A1-2007/100256
- DE-A1-102008 014 757
- DE-A1-102008 014 757
- JP-A- 6 182 917
- JP-A- 2008 127 725

## Description

### Technical scope of the invention

The present invention relates to a laminated membrane specially suited to withstand the flames and heat developed, for example, by a fire in a vehicle or a train in a tunnel. More specifically the invention relates to a sheet particularly, but not exclusively, suitable for fastening to a wall and/or a roof particularly in a tunnel. The sheet is preferably fastened to the wall or roof by fastening devices such as bolts, plugs or the like. The sheet may preferably be formed with studs and/or channels protruding on at least one side designed to face the substrate so that water which may run from the wall can be drained away along the sheet between said studs and/or channels. The studs may in this case be designed to face the tunnel wall behind so that water can drain between the studs.

### Background

Tunnels for trains and vehicles must frequently be protected from the intrusion of water. Intrusion of water and particularly but not only, dripping water is particularly undesirable since this, during the winter season leads to the formation of ice on walls and roofs in tunnels. In railway tunnels it is also desirable to hinder water from dripping onto the rails since such dripping water can quickly cause great damage in the form of cavities, scaling or fracture of the said track leading to increased risk for derailment and accident.

It has previously been suggested to insulate and/or protect the walls and roof in tunnels with watertight plates of insulating material bolted, for example, to the walls and roof. Such sheets are frequently composed of plastic materials which constitute a big hazard if heat or fire develops. Efforts are therefore made to render such sheets fire and flame retardant and flame resistant for as long as possible so that the spread of a fire is limited and/or people have time to evacuate the tunnel without injury from fire and smoke. Ideally such membranes should also secure that water does not drip into the body of the tunnel but run along the membrane, down along the wall of the tunnel and thereafter out, but in the least that drops of water fall outside the track or road.

JP2004293150 discloses a flexible textile fabric suitable for fastening to a wall or roof in a tunnel by means of fastening devices. The textile comprises a fire protection mesh intended to face towards the space of the tunnel, the fire protection being in the form of a fire proof, incombustible layer in the shape of a fibre bundle of carbon fibre. The fire protection textile is impregnated with a flame retardant polymer. The fiber bundle is thus fixed on the surface of and carried by the fire retardant polymer, together forming an integrated unit. The textile can be covered with a polymeric sheet provided with grooves in order to drain water.

### Summary of invention

One object of the present invention is to provide an improved fire resistant sheet or cover for use on walls and roofs in tunnels where the sheet, according to the test requirements, can be subjected to direct flame for a longer period, for example for at least 20 minutes, without burning and/or melted material dripping into the tunnel opening below such a covering material.

Another object of the present invention is to provide a membrane which hinders drops or objects from falling into the space below the membrane, whether in the form of water, ice, small stones or sinking, melted or flowing or plastically seeping plastic material.

A further object of the invention is to provide an improved watertight sheet for covering walls and roofs in tunnels which, at the same time, is fire resistant and proof..

A further object of the invention is to provide a sheet which is simple to mass produce and which, at the same time, gives improved security against accidents caused by the intrusion of water, falling objects and/or fire.

Another object of the invention is to provide a membrane sheet which is as fire resistant as possible so that any burning is self-extinguishing when the source of the flame is removed.

Another object of the present invention is to provide a watertight membrane which is flexible, preferably in both directions and which, to a greater or lesser degree can be shaped to the surface to be covered and, at the same time, makes possible simple and rapid fixing to a rock surface without allowing water or melted plastic to flow or drip into the room beneath the membrane.

A further object of the invention consists of making available a membrane covered with a fireproof fiber cloth which retains its fireproof qualities, texture, structural integrity and strength even if the plastic carrying it has burnt or melted locally.

A further object is to provide a solution which is safe under an evacuation so that persons escaping are not injured either by burning plastic or falling drops of hot plastic.

Yet a further object of the present invention is that the already mentioned fiber cloth shall also function as either/or a stiffening or surface reinforcement for the underlying plastic foil when, for example, a train passes at high speed through the tunnel and in that way creates a axial air movement and a sudden radial and axial pressure wave in the tunnel. The reinforcement is also important as a protection against falling objects.

The above mentioned objects are achieved by a solution described in more detail in the independent patent claims whilst embodiments are defined in the dependent claims.

According to the invention the thin sheet or membrane is at least on one side provided with a fireproof layer in the form a fiber cloth of a fire retarding or fire proof material made of basalt and/or carbon fiber and that the sheet or membrane, which is load carrying in the installed state, is made from a fire retardant plastic foil, so that the fiber cloth and plastic foil form an integral unit.

The said at least one layer can be applied to the face of the sheet intended to face inwards towards the tunnel space whilst the studs project from the opposite side of the sheet. Furthermore the layer may preferably consist of several layers of the fire resistant parallel basalt fibers.

According to one embodiment at least one or more layers of basalt fiber may be used, each neighboring layer of fibers being arranged in a crossing pattern in relation to the neighboring layer so that the fibers for example lie in layers on top of each other. Furthermore the fiber cloth may preferably be equipped with a large number of parallel seams stitched with a thread of non-combustible material thereby holding the fibers together. These seams should preferably lie at a short distance apart, for example but not necessarily 10 - 50 mm, whilst the distance between the seams along the fiber cloths edges or ends can be closer for example less than 10 mm.

Alternatively the fiber cloth can be a woven construction with both the warp and weft of basalt fiber, thus forming a woven cloth or a canvas like cloth.

Said at least one layer is glued or welded, preferably glued over the whole surface, alternatively spot glued or spot welded to the sheet. Whether a glue or adhesive paint is chosen this is preferably applied to the whole surface of the basalt cloth and/or foil intended to be in contact with the sheet. The glue or paint should be of a water based type with fire-resistive properties.

In order to strengthen the final or end product and/or improve the adhesion between the basalt cloth and the plastic sheet a reinforcement net may be firstly be welded or glued to the sheet and thereafter paint/glue is applied and the basalt cloth is laid on and pressed against the sheet with applied reinforcement net. The reinforcement net may preferably be of a very light type, glued or welded to the sheet.

Furthermore at least one of the said layers may be corona, flame or plasma surface treated thereby, amongst other things increasing the adhesion to the plastic, and/or one or more layers of gunite, intended to be sprayed on the surface facing the tunnel space, may be applied.

At least one layer of the said incombustible fiber cloth may preferably be wholly or partly incorporated in the load bearing fire resistive plastic foil. Furthermore at least one layer of the incombustible fiber cloth may be of a woven construction and may be reinforced and/or stiffened by, for example, a thicker fiber layer of basalt or carbon stretching along and/or across the layer. Alternatively or in addition, the said layer may preferably be in the form of a woven cloth where parts of the warp and/or weft are thicker than the others.

Alternatively the cloth can be constructed from layers of parallel threads of basalt or carbon fibers lying at an angle in relation to each other and held in place by seams preferably at an angle to the direction of the fibers. The seams are preferably sewn with treads made of a material which may withstand high temperature and are of a type which does not burn but only melts at very high temperature, for example over 800°C. In order to secure good adhesion between the treads in the seams and the fibers the metal thread can be covered with a fire resistant plastic material. The thread may also be coated with a polyofin to increase the adhesion to the plastic membrane.

If the fiber cloth consists of several layers of fiber laid on top of each other, the fiber direction of each layer should, to a greater or lesser degree, run more or less across or at an angle in relation to the adjacent layer of fiber.

Sensors for the measurement of temperature or moisture can also be woven or sewn into the fiber layer at suitable places together with the leads to a point of contact.

According to the present invention a sheet, membrane or foil with the said fiber cloth may preferably can be produced in the following way:

A flexible foil of a fire resistive plastic material is extruded from an extruder and led further to a calendar and/or forming station whilst a cloth comprising at least one layer of fireproof material is pressed continuously in the calendar and/or forming station onto the surface of the extruded fire resistive plastic material whilst this material is still plastic so that forming over a forming roller contributes to making the fire resistive plastic sheet and the fireproof basalt cloth as an integral unit.

Alternatively the extruded plastic foil passes through a station where glue or paint is applied more or less to the whole surface, whereupon a basalt cloth is applied to the glued or painted surface and the two are pressed together with the help of press rollers. The unit can then pass through a curing station where the plastic foil with the applied basalt cloth is cured.

As an alternative a reinforcing net can be glued or painted fast to the same side of the plastic foil to which the basalt cloth shall be fastened in an operation prior to the application of the basalt cloth. The net will then function as a reinforcement of the final end product, giving a better adhesion of the basalt cloth.

A layer of the fire retardant plastic foil can also consist of a layer of fire retardant plastic material having good adhesion to the flame proof material on that surface of the fire retardant material intended to lie against the layer of fire proof material.

One or more layers of fire resistant or incombustible material may preferably constitute an integral and more or less embedded part of the sheet, covered at least on one side by a fire resistant material, for example fire resistant polypropylene or polyethylene. Said at least one layer of fiber cloth may be wholly or partly embedded into the surface of the fire resistant foil. Alternatively, or in addition, the cloth may be glued or welded, preferably spot glued or spot welded to the foil. Alternatively the layer may be fed into the extruder so that the single or several layers are co-extruded with the flame resistant layer(s).

Furthermore one or more layers of the incombustible cloth can be thicker than the adjacent layer, for example up to a thickness of 2-20mm.

According to the present invention the fire proof solution provided has a sufficiently low weight to make installation of a unit possible by hand for one operator. The solution is furthermore easy to install, is flexible in lengthwise and crosswise directions and also is easy to adapt in relation to the underlying roof. The solution is thus easy to fix and is at the same time strong and flame retarding.

If a membrane according to the invention is subjected to fire or intense heat the plastic will melt and finally burn as long as there is an external heat source present. If the heat source is removed the plastic will no longer burn. In this phase there will be little smoke produced and little production of undesirable gasses.

According to the invention the plastic will only melt. Since the basalt cloth is relatively dense there is little possibility for hot melted plastic to run down into the room below. In the case of fire it will only be the area directly affected by the heat source which will melt whilst the area of plastic around will remain intact with its structural strength.

The membrane can be supplied either in sheet of the desired dimensions or in roll form.

Since glue is used in the construction it is not necessary to treat the edges or joints to avoid fraying. The jointing process will also be simplified and adhesion to the overlapping membrane improved since glue/paint has already been applied more or less to the whole surface. In this way adhesion for paint or glue applied to joints on erection and jointing of the produced elements in a tunnel is improved.

Another important advantage of using paint or glue as an adhesive is that the basalt cloth becomes impregnated. Since a basalt cloth has a tendency to absorb water through pores in the fiber these pores will be more or less closed when the cloth is baked or embedded in glue/paint capillary action eliminated or at least reduced.

### Short description of drawings.

The invention will now be described in more detail with reference to the enclosed drawings where:
Figure 1 shows schematically a cross section through a tunnel where a membrane according to the invention is positioned and fastened at a distance to the rock surface;
Figure 2 shows schematically a cross section through a tunnel where a membrane has been fastened directly to the rock surface;
Figure 3 shows a section of the membrane according to the invention where parts of the membrane's components are removed to show the membranes construction;
Figure 4 shows schematically vertical sections of single components of a prior art plug for fastening the membrane directly to the rock surface;
Figure 5 shows schematically the membrane according to the invention with a plug fastened to a rock surface;
Figure 6 shows schematically a production line according to the invention for the production of a foil or sheet with a applied basalt cloth where the basalt cloth is applied to the foil or membrane during the forming process of the membrane or foil; and
Figure 7 shows schematically a production line for fastening the basalt cloth with glue or paint.

### Detailed description of the invention

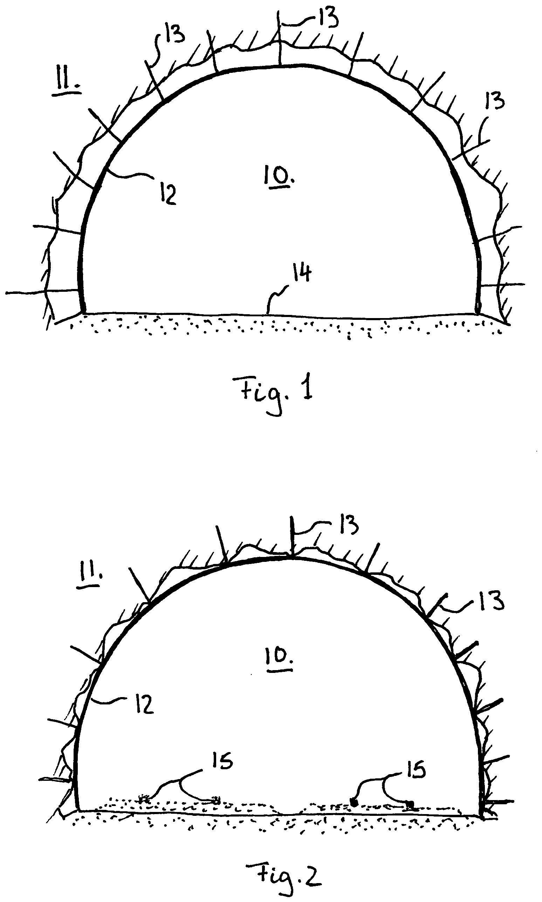

Figures 1 and 2 show schematically a cross section of a tunnel 10 which has been blasted in rock 11. The rock wall 11 is clad with a joinable membrane 12. The membrane is fastened to the rock wall 11 by the help of numerous fastening plugs and/or bolts 13 of a suitable conventional type. The membrane 12 can either be fastened at a distance from the rock surface 11, as shown in fig. 1 or direct to the rock surface 12 with even distance between fastening points as shown in Figure 2. Fastening is made at even distances both along and round the tunnel opening.

In connection with the fastening of the membrane 12 a support framework can be used (not shown). The tunnel 10 may be provided with a road surface 14 for vehicles as shown in Figure 1 or a railway track 15 as indicated in Figure 2.

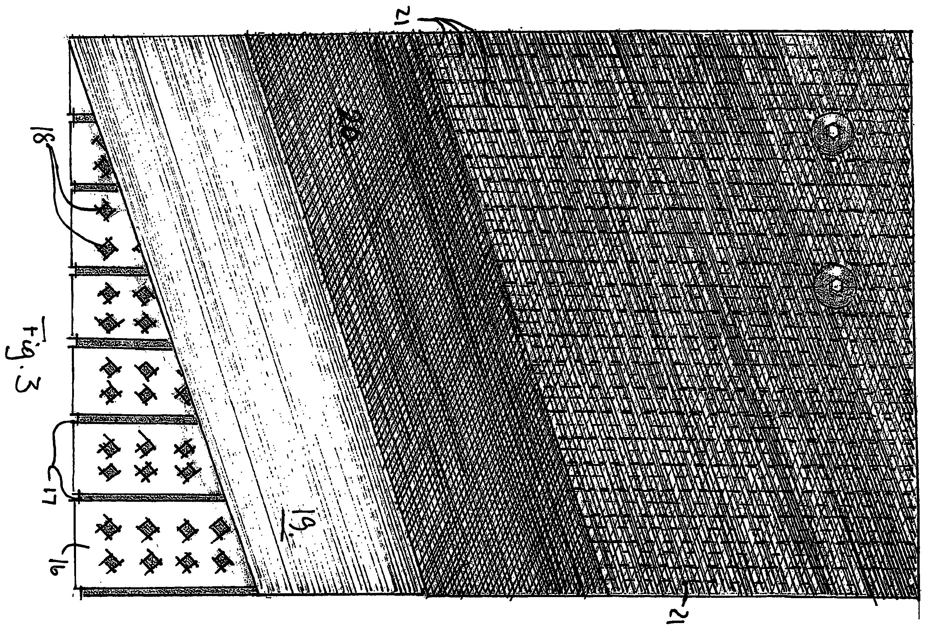

Figure 3 shows a section of a membrane 12 according to the invention where parts of the membrane's constructive elements are removed to make the construction of the membrane 12 visible. Membrane 12 according to the invention consists of a thin foil 16 which is flexible in a lengthwise and transverse direction and preferably supplied in roll form. The membrane can also be supplied in sheets. The sheet 16 may preferably formed with continuous grooves 17 or channels which extend in the sheet's 16 lengthwise and/or transverse direction and a large number of evenly distributed studs 18 preferably arranged in a repeating pattern along and across the sheet 16. With the solution according to the present invention both the channels 17 and the studs 18 face in the same direction, i.e. towards the rock surface 11. The grooves or channels 17 will then function as stiffening and will direct water in the desired direction. Membrane 12 has also a first layer 19 of basalt fiber which, in the version shown is laid at an angle to the membrane's 18 lengthwise direction. Thereafter a second layer 20 of basalt fiber is laid at an angle opposite to the angle of the first layer 19. Said angles may be any angles other than 0 degrees. An overlapping pattern is thus formed. In this connection it should be mentioned that further layers of basalt fiber can be used laid in an overlapping and crossing pattern. In the construction shown the layers 19, 20 are held together by means of a large number of seams 21 which in the embodiment shown extend in the lengthwise direction of the sheet 16. The seams 21 are made with a thread made of a metal with a high melting point for example over 800°C. Furthermore the metal thread can be coated with a fire retardant plastic material. The distance between two neighboring seams 21 can, for example be in the area 3 - 20 mm. Along the edges the distance can be kept small so that the edges do not fray.

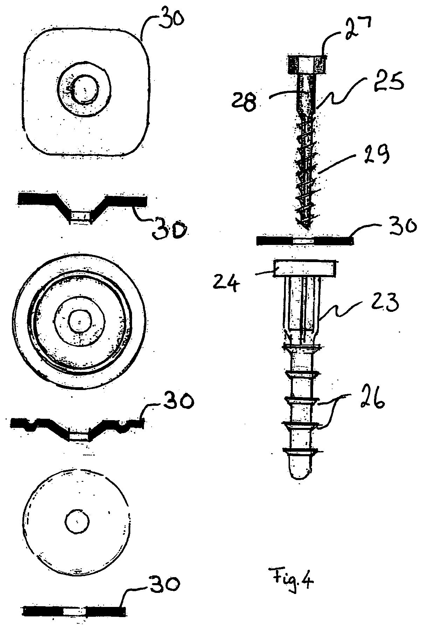

Two fastening plugs 22 or bolts are indicated in Figure 3.The form of these will be described below in connection with Figure 4.

Figure 4 shows schematically a section of the separate components constituting a plug 22 for fastening the membrane 12 directly to the rock wall 11. The plug 22 shown has two main components, a female plug 23 with an expanded head 24 and with an internal axial hole for receiving the male plug 25. On the outside of the female plug 23, on the part intended to lie inside a hole drilled in the rock wall, are a number of outward facing fins 26 or resilient tongues. The male plug 25 is correspondingly equipped with a plug head 27 which in a conventional manner is formed so it can be screwed in and out with a suitable tool, a straight shank 28 and a threaded portion 29. The plug 22 is further provided with a loose washer 30 with a hole intended to house the male plug 25. The washer may have any suitable shape, in the form shown in Figure 4 the washer 30 can be either round or square. The shape of the washer 30 may preferably fit the shape of the studs 18 in the sheet 16.

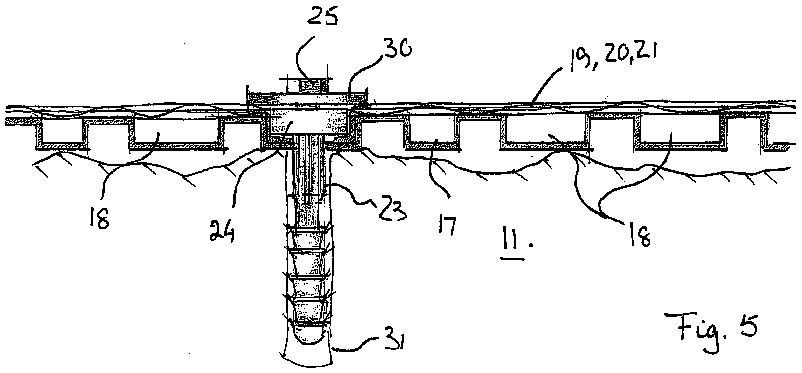

Figure 5 shows schematically the membrane with a plug 22 fastened to a rock wall 11. The Figure indicates a membrane 12 where the convex side of the studs 18 faces inwards towards the rock surface 11 and where a female plug is inserted through an opening drilled in the deepest area of stud 18 and into a hole 31 drilled in the rock 11. The head 24 of the female plug 23 lies against the bottom of stud 18. The head may preferably have the same or slightly less height than the depth of the stud 18. As shown, the washer 30 is larger than the opening of the stud 18. The male plug 25 is inserted in the opening in the female plug 23 and screwed in so that the walls of the female plug 23 expand sideways and wedge the female plug 23 in the hole 31.

With this construction water is hindered from leaking into the tunnel opening 10 through holes made in the membrane 12 for fastening.

A membrane 12 may according to the invention be made in the following way:

A flexible foil of a fire retardant plastic material is first extruded from an extruder and led further to a calendar and/or forming station whilst a cloth consisting of at least one layer of fireproof material is pressed continuously in the calendar and/or forming station onto the surface of the extruded fire resistant plastic material whilst this plastic material is still plastic so that forming over a forming roller contributes to making the fire resistant plastic foil and the fireproof basalt cloth an integral unit. The cloth is made in advance and can be delivered from a roll or similar.

It should be noted that in the production of the cloth a glue-like material can be applied to a layer prior to laying another layer onto the glued surface of the first layer. Furthermore the basalt cloth can be corona, flame or plasma treated in order, amongst other things, to improve the adhesion between the cloth and the plastic. Alternatively glue or a glue like material can be applied to the surface of the plastic and/or the cloth to ensure sufficient adherence between the cloth and the plastic.

One or more layers of fire resistant or fireproof material may preferably form an integrated and more or less embedded part of the membrane where at least one side consists of a flame retardant material for example flame retardant polypropylene or polyethylene. At least one layer of fiber cloth can be wholly or partly incorporated in the surface of the fire retardant foil. Alternatively the layer can be fed into the extruder so that this single or several layer material is co-extruded together with flame retardant layer.

Further, one or several layers of the fireproof cloth may be thicker than an adjacent layer, for example 2-20 mm.

A layer of the flame retardant plastic foil can also consist of a layer of flame retardant plastic material with good adhesion to the flameproof material on the surface of the fire retardant material intended to lie against the layer with fireproof material.

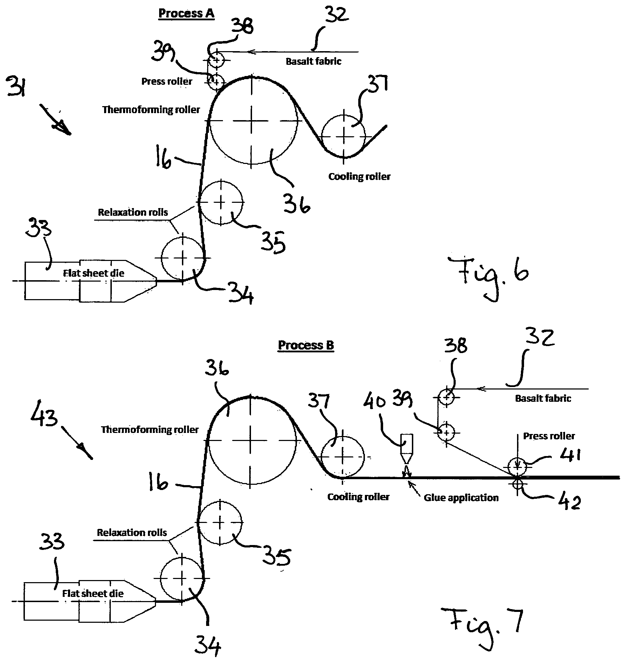

Figure 6 shows schematically a line 31 for thermoforming of a membrane from a plastic material according to the present invention where a layer 16 of extruded plastic and a layer of woven or non-woven cloth 32 of basalt fiber is applied to the extruded, elastic, still plastic membrane 16 in connection with the thermoforming of the membrane 16 and before curing of the same. According to the embodiment shown in Figure 6 a membrane 16 of plastic material is extruded from an extruder (not shown) via a flat tool or nozzle 33. From the flat tool 33 the formable membrane is led round the first roller 34 where the direction of movement is changed 90° and thereafter past roller 35 to the forming cylinder 36 for thermoforming where studs, grooves, patterns and the like can be vacuum formed on the soft plastic membrane 16. From the vacuum forming cylinder 36 the still relatively soft and formable membrane 16 with attached basalt fiber cloth 32 is led downwards under a water cooled cylinder 37 where the plastic material is cooled down in known manner so that its vacuum formed shape is 'frozen'.

Each of the rollers 34 - 37 according to the present invention may preferably be of a type which can be described as temperature controlled heated rollers where temperature and speed of rotation can be coordinated so that in a start-up situation rollers are warmer than when production is running and/or the speed can be regulated during the process so that a optimal forming process is achieved. In this connection it should be added that all the rollers 34 -37 can be run with different speeds so that the differential speeds contribute to the forming and dimensional control of the membrane 16.

The basalt fiber cloth 32 is led for example from a storage reel and is fed from the storage reel to the top of the forming cylinder 36 in the opposite direction to that of the membrane 16 and then over the vacuum forming cylinder 36. The basalt fiber cloth 32 is led over the first cylinder 38 where its direction of motion is changed 90° downwards, thereafter under a pressure cylinder 39 lying against the vacuum forming cylinder 36 and positioned a little before the highest point of the vacuum forming cylinder 36. In this way the basalt fiber cloth is pressed against the hot, plastic membrane 16 before this comes to the vacuum forming cylinder's highest point. This contributes to good adhesion of the basalt fiber cloth 32 to the one side of the membrane 16. According to this invention the pressure roller 39 is placed, in relation to the vacuum forming cylinder 36, in a position so that the cloth 32 does not come into contact with and becomes fastened to the hot plastic membrane 16 too soon. This would make the subsequent forming of the membrane 16 with cloth more difficult, nor must the first contact between the cloth 32 and the membrane 16 be so late in the forming process that the basalt fiber cloth does not adhere properly to the membrane 16.

According to the construction shown the basalt fiber cloth 32 is welded/glued to the side of the membrane 16 which has been formed with studs in that the basalt fiber cloth is fastened to the top of these studs, or on the reverse, flat side of the membrane 16.

Figure 7 shows schematically a production line 43 for the fastening of the basalt fiber cloth 32 by gluing or painting. According to this variant the application of the basalt fiber cloth 32 is moved from the vacuum forming cylinder 36 to a stage after the cooling roller 37. In this variation glue or paint is applied after roller 37 by sprays 40 after which the basalt fiber cloth 32 is laid on the glue or paint covered surface of the membrane 16 for thereafter to be pressed together by press roller 41. Also in this case the basalt fiber cloth 32 can be delivered from a storage reel and be led from this over a roller 38 where the direction of the cloth is changed 90° downwards and under a second roller 39 before being led under the press roller 41 where the membrane 16 and the basalt cloth are pressed together when passing between the rollers 41 and 42.

In addition or as an alternative the plastic surface of the membrane 16 which comes into contact with the basalt fiber cloth can be of a plastic type with a built in good adhesion to the basalt cloth 32.

In the above it is indicated that it is basalt fiber cloth which is to be applied and fastened to the membrane. Alternatively, the cloth to be fastened to the membrane can also be of a different type, for example a foil, another laminate, a composite or membrane, a filter cloth or textile cloth, woven or non-woven fiber cloth.

## Claims

1. Flexible membrane (12) particularly suitable to be fastened to a wall (11) and/or roof in a tunnel (10) by means of fastening devices (22), the membrane being formed with studs (18) and/or grooves (17) protruding from at least one side of a sheet or plate (16), so that water is allowed to flow between the studs (18) and/or the grooves (17), and a fire protection arranged on a side of the membrane (12) intended to face towards the space of the tunnel (10),
**characterized in that** the sheet or plate (16) of plastic material is formed of a flexible foil made of a fire retardant plastic material, the fire protection being in the form of at least one fire proof, incombustible layer (19,20) in the shape of a fiber cloth made of basalt or carbon fiber, fixed on one surface of and carried by the fire retardant plate (16), the carbon or basalt fibers being held together for formation of the cloth, and wherein the incombustible cloth of carbon or basalt fibers and the fire retardant plate (16) together forming an integrated unit.

2. Membrane (12) according to claim 1, where the layer (19,20) is composed of several layers of fireproof parallel basalt fibers.

3. Membrane (12) according to claim 1 or 2, where at least one layer (19) of basalt fiber is arranged in a pattern which crosses the neighboring layer (20).

4. Membrane (12) according to one of the claims 1-3, where the fiber cloth (19,20) is equipped with a large number of parallel seams (21) made of an incombustible material thereby holding the fibers in place.

5. Membrane (12) according to one of the claims 1-4, where the at least one layer (19,20) is glued or welded, preferably spot glued or spot welded to the sheet (16).

6. Membrane (12) according to claim 5, where the surface on at least one of the said layers (19,20) has been corona, flame or plasma treated in order, amongst other things, and/or to one or more layers of gunite applied as a protection layer on the inside of the tunnel (10).

7. Membrane (12) according to one of the claims 1-7 where the at least one layer (19,20) of the fireproof fiber cloth is partly incorporated in the fire retardant plastic sheet (16).

8. Membrane (12) according claim 1, where the said at least one layer (19.20) is a woven cloth and that the woven cloth incorporates reinforcements or stiffeners composed of thicker layers of basalt or carbon either lengthwise or across the layer (19,20).

9. Membrane (12) according to one of the claims 1-8, where the layer (19,20) is in the form of a woven cloth contains some warp and/or weft threads which are thicker than other threads in the warp and/or weft.

10. Membrane (12) according to one of the claims 1-9, where the cloth is made of parallel threads of basalt and/or carbon fiber where the threads are held in position by stitched seams (21) preferably at an angle to the direction of the threads, the said seams (21) preferably being of a material which withstands high temperatures and of a type which does not burn but can melt at extremely high temperature.

11. Membrane (12) according to one of the claims 1-10, where several layers (19,20) of fiber are laid on top of each other and where the fiber direction in a neighboring layer (20) is to a larger or lesser degree at an angle to the aforementioned neighboring layer (19).

12. Membrane (12) according to one of the claims 1-11, where the fire-proof layer (19,20) has a thickness in the range of 2-20 mm.

13. Membrane (12) according to one of the claims 1-12, where sensors for the measurement of temperature or moisture can be woven into the layer.

14. Method for producing a membrane (12) defined by the claims 1-13,
**characterized in that** a sheet or a plate (16) of a fire retardant material is extruded from an extruder and thereafter is led to a calendar roller before being led over a forming cylinder, whereby a cloth (19,20,21) of a flame proof material is laid continuously with the extruded plastic sheet (16) during calendaring and/or over the forming station and/or downstream of the forming station, the cloth being laid on the surface of the extruded fire retardant sheet (16) preferably before the fire retardant material in the sheet (16) has stiffened completely, so that either the forming over the forming cylinder or glue or fire resisting paint applied at a later stage, contribute to combine or unite the fire retardant plastic sheet (16) and the fireproof basalt cloth (19,20,21) to produce an integrated entity.

## Patentansprüche

1. Flexible Membran (12), die insbesondere geeignet ist, an einer Wand (11) und/oder einem Dach in einem Tunnel (10) mittels Befestigungseinrichtungen (22) befestigt zu werden, wobei die Membran mit Zapfen (18) und/oder Rillen (17) ausgebildet ist, die von mindestens einer Seite einer Folie oder Platte (16) hervor stehen, so dass Wasser zwischen den Zapfen (18) und/oder den Rillen (17) fließen kann, und wobei ein Brandschutz auf einer Seite der Membran (12) angeordnet ist, der dafür vorgesehen ist, in den Raum des Tunnels (10) gerichtet zu sein,
**dadurch gekennzeichnet, dass**
die Folie oder Platte (16) aus Kunststoffmaterial aus einer flexiblen Folie hergestellt ist, die aus einem feuerhemmenden Kunststoffmaterial ausgebildet ist, wobei der Feuerschutz in Form von mindestens einer feuerfesten, unbrennbaren Schicht (19, 20) in der Form eines Fasergewebes ausgebildet ist, das aus Basalt- oder Kohlenstofffasern ausgebildet ist, die auf einer Oberfläche der feuerhemmenden Platte (16) befestigt ist und davon getragen wird, wobei die Kohlenstoff- oder Basaltfasern zur Bildung des Gewebes zusammengehalten werden, und wobei das unbrennbare Gewebe aus Kohlenstoff- oder Basaltfasern und die feuerhemmende Platte (16) zusammen eine integrale Einheit bilden.

2. Membran (12) nach Anspruch 1, wobei die Schicht (19, 20) aus mehreren Schichten von feuerfesten parallelen Basaltfasern zusammengesetzt ist.

3. Membran (12) nach Anspruch 1 oder 2, wobei mindestens eine Schicht (19) aus Basaltfasern in einem Muster angeordnet ist, das die benachbarte Schicht (20) kreuzt.

4. Membran (12) nach einem der Ansprüche 1 bis 3, wobei das Fasergewebe (19, 20) mit einer großen Anzahl von parallelen Säumen (21) versehen ist, die aus einem unbrennbaren Material gebildet sind, wodurch die Fasern an Ort und Stelle gehalten werden.

5. Membran (12) nach einem der Ansprüche 1 bis 4, wobei die mindestens eine Schicht (19, 20) an die Folie (16) geklebt oder geschweißt, vorzugsweise punktverklebt oder punktgeschweißt ist.

6. Membran (12) nach Anspruch 5, wobei die Oberfläche auf mindestens einer der Schichten (19, 20) corona-, flammen- oder plasmabehandelt ist, um, unter anderem und/oder auf eine oder mehrere Schichten von Spritzbeton, der als eine Schutzschicht auf der Innenseite des Tunnels (10) aufgebracht ist.

7. Membran (12) nach einem der Ansprüche 1 bis 7, wobei die mindestens eine Schicht (19, 20) des feuerfesten Fasergewebes teilweise in der feuerhemmenden Kunststofffolie (16) enthalten ist.

8. Membran (12) nach Anspruch 1, wobei die mindestens eine Schicht (19, 20) ein gewebtes Gewebe ist und dass das gewebte Gewebe Verstärkungen oder Versteifungen beinhaltet, die aus dickeren Schichten aus Basalt oder Kohlenstoff entweder in Längsrichtung oder quer zu der Schicht (19, 20) zusammengesetzt sind.

9. Membran (12) nach einem der Ansprüche 1 bis 8, wobei die Schicht (19, 20) in der Form eines gewebten Gewebes vorliegt und einige Kettfäden und/oder Schussfäden enthält, die dicker sind als andere Fäden in dem Kettfaden und/oder in dem Schussfaden.

10. Membran (12) nach einem der Ansprüche 1 bis 9, wobei das Gewebe aus parallelen Fäden aus Basalt- und/oder Kohlenstofffasern ausgebildet ist, wobei die Fäden durch gesteppte Säume (21) an Ort und Stelle gehalten werden, vorzugsweise in einem Winkel zur Fadenrichtung, wobei die Säume (21) vorzugsweise aus einem Material bestehen, das hohen Temperaturen widersteht und von einem Typ ist, das nicht brennt, jedoch bei extrem hohen Temperaturen schmelzen kann.

11. Membran (12) nach einem der Ansprüche 1 bis 10, wobei mehrere Schichten (19, 20) aus Fasern übereinander liegen und wobei die Faserrichtung in einer benachbarten Schicht (20) zu einem höheren oder geringeren Grad winklig zu der zuvor erwähnten benachbarten Schicht (19) angeordnet ist.

12. Membran (12) nach einem der Ansprüche 1 bis 11, wobei die feuerfeste Schicht (19, 20) eine Dicke in dem Bereich von 2 bis 20 mm aufweist.

13. Membran (12) nach einem der Ansprüche 1 bis 12, wobei Sensoren zur Temperatur- oder Feuchtigkeitsmessung in die Schicht eingewebt sein können.

14. Verfahren zur Herstellung einer Membran (12) definiert durch die Ansprüche 1 bis 13,
**dadurch gekennzeichnet, dass**
eine Folie oder eine Platte (16) aus einem feuerhemmenden Material von einer Extrudiereinrichtung extrudiert wird und danach zu einer Kalanderwalze geführt wird, bevor es über einen Formzylinder geführt wird, wobei ein Gewebe (19, 20, 21) eines flammenfesten Materials kontinuierlich über die extrudierte Kunststofffolie (16) während des Kalanderns und/oder über die Formstation und/oder abwärts der Formstation gelegt wird, wobei das Gewebe, das auf der Oberfläche der extrudierten feuerverzögernden Folie (16) gelegt wird, sich vorzugsweise vor dem feuerverzögernden Material in der Folie (16) vollständig versteift hat, so dass entweder das Formen über dem Formzylinder oder der Klebstoff oder die feuerhemmende Farbe, die zu einem späteren Zeitpunkt aufgebracht werden, dazu beitragen, die feuerhemmende Kunststofffolie (16) und das feuerfeste Basaltgewebe (19, 20, 21) zu kombinieren oder zu vereinigen, um ein integriertes Gebilde zu erzeugen.

## Revendications

1. Membrane flexible (12) particulièrement adaptée à être fixée sur un mur (11) et/ou contre le plafond d'un tunnel (10) au moyen de dispositifs de fixation (22), la membrane étant formée avec des plots (18) et/ou des rainures (17) dépassant d'au moins un côté d'une feuille ou d'une plaque (16), si bien que l'eau peut circuler entre les plots (18) et/ou les rainures (17), et une protection contre le feu placée d'un côté de la membrane (12) destinée à faire face à l'ouverture du tunnel (10),
**caractérisée en ce que** la feuille ou plaque (16) de matière plastique est formée d'une feuille flexible faite d'une matière plastique ignifugeante, la protection contre le feu étant sous forme d'au moins une couche ignifuge incombustible (19, 20) sous forme de toile de fibre faite de fibre de basalte ou de carbone, fixée sur une surface de la plaque ignifugeante (16) et porté par elle, les fibres de carbone ou de basalte étant maintenues ensembles afin de former la toile, et où la toile incombustible de fibres de carbone ou de basalte et la plaque ignifugeante (16) forment ensemble une unité solidaire.

2. Membrane (12) selon la revendication 1, **caractérisée en ce que** la couche (19, 20) est composée de plusieurs couches de fibres de basalte parallèles résistant à l'épreuve du feu.

3. Membrane (12) selon la revendication 1 ou 2,
**caractérisée en ce qu'**au moins une couche (19) de fibre de basalte est disposée selon un motif qui croise la couche adjacente (20).

4. Membrane (12) selon l'une quelconque des revendications 1 à 3, **caractérisée en ce que** la toile de fibres (19, 20) présente un grand nombre de coutures parallèles (21) faites d'une matière incombustible maintenant ainsi les fibres en place.

5. Membrane (12) selon l'une quelconque des revendications 1 à 4, **caractérisée en ce que** la au moins une couche (19, 20) est collée ou soudée, de préférence collée par points ou soudée par points à la feuille (16).

6. Membrane (12) selon la revendication 5, dans laquelle la surface sur au moins une des dites couches (19, 20) a été traitée par corona, flamme ou plasma afin, entre autres choses, et/ou sur une ou plusieurs couches de gunite appliquées comme couche protectrice sur l'intérieur du tunnel (10).

7. Membrane (12) selon l'une quelconque des revendications 1 à 6, **caractérisée en ce que** la au moins une couche (19, 20) de la toile à l'épreuve du feu est partiellement incorporée dans la feuille de plastique ignifugeante (16).

8. Membrane (12) selon la revendication 1, **caractérisée en ce que** la dite au moins une couche (19, 20) est une toile tissée et **en ce que** la toile tissée incorpore des renforcements ou des raidisseurs composés de couches plus épaisses de basalte ou de carbone soit dans le sens de la longueur soit en travers de la couche (19, 20).

9. Membrane (12) selon l'une quelconque des revendications 1 à 8, **caractérisée en ce que** la couche (19, 20) est sous forme de toile tissée contenant des fils de chaîne et/ou de trame qui sont plus épais que d'autres fils dans la chaîne et/ou la trame.

10. Membrane (12) selon l'une quelconque des revendications 1 à 9, **caractérisée en ce que** le tissage est fait de fils parallèles de fibres de basalte et/ou de carbone où les fils sont maintenus en position par des jointures brochées (21) formant de préférence suivant un angle avec la direction des fils, les dites jointures (21) étant de préférence d'un matériau qui supporte des températures élevées et d'un type qui ne brûle pas mais peut fondre à une température extrêmement élevée.

11. Membrane (12) selon l'une quelconque des revendications 1 à 10, **caractérisée en ce que** plusieurs couches (19, 20) de fibres sont posées les unes au-dessus des autres et **en ce que** la direction des fibres dans une couche voisine (20) forme un angle plus ou moins grand avec la couche adjacente mentionnée précédemment (19).

12. Membrane (12) selon l'une quelconque des revendications 1 à 11, **caractérisée en ce que** la couche à l'épreuve du feu (19, 20) a une épaisseur comprise entre 2 et 20mm.

13. Membrane (12) selon l'une quelconque des revendications 1 à 12, **caractérisée en ce que** des détecteurs pour mesurer la température ou l'humidité peuvent être tissés dans la couche.

14. Méthode de production d'une membrane (12) définie par les revendications 1 à 13, **caractérisée en ce qu'**une feuille ou une plaque (16) d'un matériau ignifugeant est extrudée par une extrudeuse et est ensuite amenée à un rouleau à calandre avant d'être étalée sur un cylindre de mise en forme, où lequel une toile (19, 20, 21) d'un matériau à l'épreuve des flammes est étalée en continu avec la feuille de plastique extrudée (16) pendant le calandrage et/ou sur la station de mise en forme et/ou en aval de la station de mise en forme, la toile étant étalée sur la surface de la feuille ignifugeante extrudée (16) de préférence avant que le matériau ignifugeant dans la feuille ait complètement durci, si bien que soit la mise en forme sur le cylindre de mise en forme soit la colle ou la peinture résistant au feu appliquée ultérieurement contribue à combiner ou unir la feuille de plastique ignifugeante (16) et la toile de basalte à l'épreuve du feu (19, 20, 21) afin de produire une entité intégrée.
